# EUROPÄISCHE PATENTSCHRIFT

(11) **EP 0 692 180 B1**
(45) Veröffentlichungstag und Bekanntmachung des Hinweises auf die Patenterteilung: **06.05.1999**
(21) Anmeldenummer: 95110056.9
(22) Anmeldetag: 28.06.1995
(51) Int. Cl.: A01D 41/14, B65G 33/32

(54) **Steuereinrichtung wenigstens eines Einzugsfingers eines Umlaufförderers**
Controlling device of at least one retractable finger of a rotating conveyor
Dispositif de commande au moins d'un doigt relevable d'un transporteur rotatif

(30) Priorität: 15.07.1994 DE 4425142
(43) Veröffentlichungstag der Anmeldung: 17.01.1996
(73) Patentinhaber: Deere & Company, Moline, Illinois 61265-8098 (US)
(72) Erfinder: Vogelgesang, Claus-J., D-66399 Mandelbachtal (DE)
(74) Vertreter: Feldmann, Bernhard

(56) Entgegenhaltungen:
- EP-A- 0 567 192
- DD-A- 246 470

## Beschreibung

Die Erfindung betrifft eine Steuerungseinrichtung wenigstens eines Einzugsfingers eines Umlaufförderers, der einenends auf dem exzentrischen Teil einer Kurbelwelle schwenkbar und in einer Wandung eines Gehäuses verschiebbar gelagert ist.

Aus der EP-A1-0 567 192 geht ein unterschlächtig fördernder Schneckenförderer einer Erntemaschine hervor, der eine umlaufende Trommel mit waagrecht verlaufender Drehachse, darauf aufgesetzte Schneckenwindungen und einen darin enthaltenen Einzugsfingerzusammenbau enthält. Der Einzugsfingerzusammenbau weist eine Kurbelwelle auf, deren ausgelenkter Mittenbereich zur Aufnahme der Einzugsfinger bestimmt ist. Deckungsgleich mit der Anordnung der Einzugsfinger auf dem Mittenbereich sind in die Wandung der Trommel Öffnungen eingebracht, durch die sich die Einzugsfinger erstrecken. Während infolge des Antriebs der Trommel zum Fördern von Erntegut die Einzugsfinger von der Wandung umfangsmäßig mitgenommen werden und dabei um den Mittenbereich der Kurbelwelle schwenken, wird die Kurbelwelle selbst mittels Flanschen ortsfest gehalten. Demgemäß erstrecken sich bei einem Umlauf der Trommel die Einzugsfinger zwischen einer ganz eingezogenen und einer ganz ausgestreckten Stellung, so daß sie Erntegut einerseits sicher erfassen und andererseits sicher abgeben können. Wenn auch die Kurbelwelle drehfest gehalten wird, so kann sie doch innerhalb bestimmter Grenzen geschwenkt und an einer anderen Stelle festgesetzt werden, wenn die Flansche in eine andere Stellung gebracht werden. Auf diese Weise kann das Förderverhalten der Einzugsfinger dauerhaft geändert werden. Bei diesem Stand der Technik erfolgt die Verstellung der Einzugsfinger mittels eines Elektromotors und somit fernbedient. Im Falle der Reversierung der Trommel werden die Einzugsfinger derart verschwenkt, daß sie das Erntegut aus einem normalerweise stromabwärts des Umlaufförderers folgenden weiteren Förderer entfernen und neues Erntegut nicht hinzufügen.

Diese Art einer Einzugsfingersteuerung ist insofern nachteilig, als sie einen Elektro- oder Hydraulikmotor benötigt, der zu hohen Kosten führt, und Steckverbindungen an der Trennstelle zwischen der Erntemaschine und dem Erntebergungsvorsatz mit dem Umlaufförderer aufweist.

Die der Erfindung zugrundeliegende Aufgabe wird darin gesehen, eine Steuerungseinrichtung vorzuschlagen, die ohne die Verwendung eines zusätzlichen Motors unabhängig von der Förderrichtung die gewünschte Förderwirkung erbringt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird die Stellung der Einzugsfinger von dem auf die aus dem Gehäuse herausragenden Enden der Einzugsfinger wirkenden Widerstand des Förderguts gesteuert. Demgemäß wird beim normalen unterschlächtigen Fördern wie auch beim Reversieren die Kurbelwelle mittels ihres ausgelenkten Mittenbereichs in eine Stellung geschwenkt, in der die Einzugsfinger jeweils an der stromaufwärts liegenden Stelle ausreichend weit aus dem Gehäuse herausragen. Bereits kleine Förderwiderstände reichen aus, da die Kurbelwelle lose, d. h. gegen einen kaum spürbaren Widerstand schwenkbar ist. Es ist somit weder ein Elektro- oder Hydraulikmotor noch ein Seilzug oder dergleichen erforderlich, mit deren Hilfe die Kurbelwelle umgeschwenkt wird. Vielmehr erfolgt die Umschwenkung automatisch in Abhängigkeit von der Drehrichtung und der angreifenden Last. Wie bereits im Stand der Technik - allerdings nunmehr mit einfachen Mitteln - wird erreicht, daß bei einer Verstopfung eingezwängtes Material zurückbefördert wird und sich noch vor dem Umlaufförderer befindliches Material nicht oberschlächtig zugeführt wird. Selbstverständlich kann diese Erfindung auch bei oberschlächtig wirkenden Umlaufförderern verwendet werden. Der Begriff "Umlaufförderer" ist auch nicht derart einengend auszulegen, daß er nur Schneckenförderer erfaßt; vielmehr kommen auch sonstige Umlaufförderer mit Bändern, Ketten, Lamellen und dergleichen in Frage, die mit Einzugsfingern arbeiten, insbesondere aber Schneckenförderer oder Trommelförderer, die zu beförderndes Gut tangential bzw. umfangsmäßig annehmen und auf die gleiche Weise an einer anderen Stelle wieder abgeben.

Die Begrenzung des Schwenkwegs der Kurbelwelle kann auf vielfältige Weise geschehen, z. B. durch Nasen, Verdickungen, Stifte und dergl., an oder in den Einzugsfingern in dem aus dem Gehäuse herausragenden Bereich. Alternativ können ein oder mehrere Anschläge auf die Kurbelwelle direkt wirken, z. B. in der Art tangentialer Anschläge oder als Gewindegänge, Spiralnuten oder dergleichen ausgebildeter Anschläge, wobei der Gewindegang oder dergleichen endseitig geschlossen ist.

Während eine Möglichkeit, das Schwenkvermögen der Kurbelwelle in der Verwendung von Wegbegrenzern, wie Seilschlaufen, Langlöchern, Verdickungen an den aus dem Gehäuse herausragenden Abschnitten der Einzugsfinger und dergl. besteht, kann mittels eines an die Anschläge anlegbaren und vorzugsweise direkt mit der Kurbelwelle verbundenen Halters deren Schwenkweg auf einfache Weise festgelegt werden.

Wenn der oder die Anschläge verstellbar sind, kann der Schwenkbereich und dessen Lage verändert und somit sich evtl. ändernden Bedingungen angepaßt werden.

Mit einem insbesondere fernsteuerbaren Riegel, z. B. in der Art eines elektromagnetisch betätigten Stifts kann wahlweise die freie Schwenkbewegung der Kurbelwelle und somit das Umschlagen der Einzugsfinger verhindert werden. Eine Fernsteuerung kann jedoch auch mittels eines Gestänges, eines Seilzugs, elektrisch oder hydraulisch erfolgen.

Mittels eines Ausgleichgewichts, das dem von der Exzentrizität der Kurbelwelle und den Einzugsfingern herrührenden Drehmoment entgegen wirkt, erfolgt ein Umschlagen der Kurbelwelle beim Auftreffen der Einzugsfinger auf zu beförderndes Material noch schneller, da dieses Drehmoment nicht von dem Materialwiderstand übergangen werden muß.

Der Drehwiderstand der Kurbelwelle in ihrem Träger ist dann besonders gering, wenn sie in Pendellagern gelagert ist, die als Wälz- oder Gleitlager ausgebildet sein können. Als Gleitlager kommen insbesondere aus der Drei-Punkt-Hydraulik-Technik bekannte Kugelösen in Betracht.

In der Zeichnung ist ein nachfolgend näher beschriebenes Ausführungsbeispiel der Erfindung dargestellt. Es zeigt:
- Fig. 1: eine perspektivische Ansicht eines Umlaufförderers mit einer erfindungsgemäßen Steuerungseinrichtung und

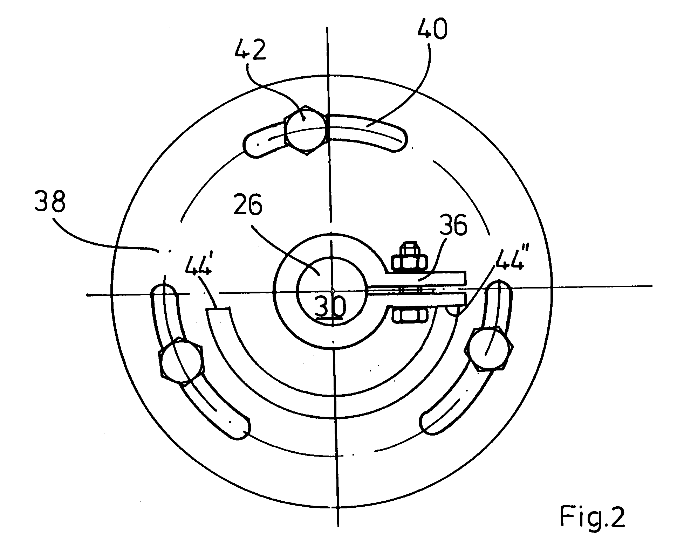

- Fig. 2: einen Teil der Steuerungseinrichtung in Seitenansicht und gegenüber der Darstellung in Figur 1 geschwenkt.

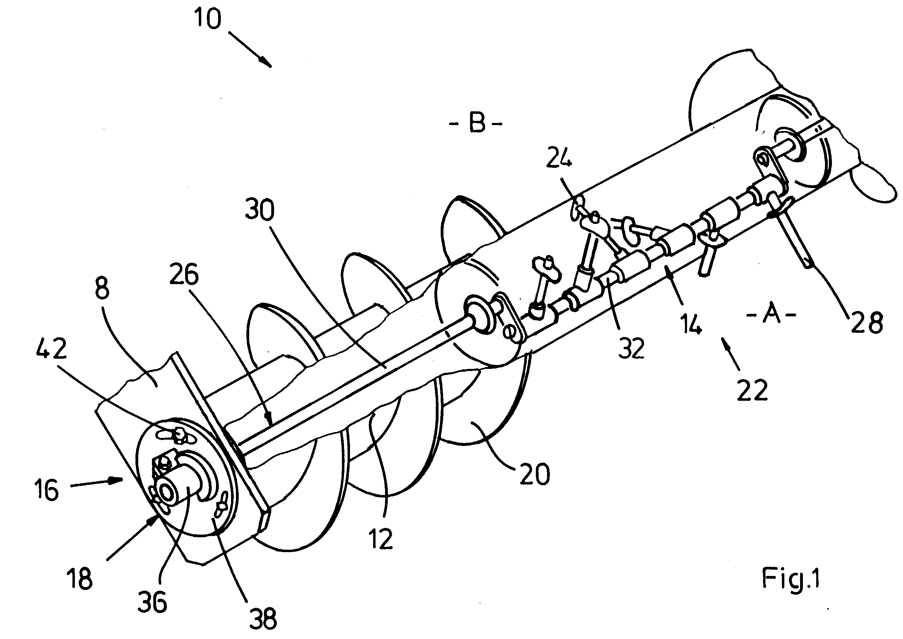

In Figur 1 ist ein Umlaufförderer 10 gezeigt, wie er insbesondere in landwirtschaftlichen Maschinen Anwendung findet. Mittels derartiger Umlaufförderer 10 wird häufig Erntegut zusammengeführt und einem weiteren, schmaleren Förderer aufgegeben. Derartige Umlaufförderer 10 findet man demzufolge in Schneidwerken, Maisgebissen, Maispflückern, Pick-Ups und dergleichen.

Der Umlaufförderer 10 setzt sich aus einem Gehäuse 12, einem Einzugsfingerzusammenbau 14 und einer erfindungsgemäßen Steuerungseinrichtung 16 zusammen.

Das Gehäuse 12 ist rohrförmig aus Blech gebildet und hat einen Durchmesser von ca. 200 bis 400 mm. Es ist endseitig in Lagern 18 um eine normalerweise horizontale Achse drehbar an einer Seitenwand 8 gehalten und auf seiner Umfangsfläche mit Schneckenwendeln 20 besetzt, die während der Drehbewegung des Gehäuses 12 erfaßtes Gut zur Längsmitte fördern. In einem Mittenbereich 22 ist zwischen entgegengesetzten Schneckenwendeln 20 ein Bereich für den Einzugsfingerzusammenbau 14 vorgesehen, in dem die Umfangsfläche des Gehäuses 12 von wenigstens einer Öffnung 24 durchbrochen ist. Während des Betriebs wird das Gehäuses 12 über nicht gezeigte Antriebselemente, wie Zahnräder und Ketten in Drehung versetzt.

Der Einzugsfingerzusammenbau 14 wird von einer Kurbelwelle 26 und wenigstens einem Einzugsfinger 28 gebildet. Ein zentrischer Teil 30 der Kurbelwelle 26 erstreckt sich wenigstens auf einer Seite konzentrisch durch das Lager 18 des Gehäuses 12 nach außen, bzw. das Gehäuse 12 ist auf dem zentrischen Teil 30 der Kurbelwelle 26 drehbar gelagert. Die Kurbelwelle 26 selbst ist aber ebenfalls über wenigstens ein nicht gezeigtes Lager mit möglichst geringer Reibung an der Seitenwand 8 drehbar gelagert. Bei diesem Lager handelt es sich vorzugsweise um ein als Pendellager ausgebildetes Wälz- oder Gleitlager, das einer radialen Auslenkung der Kurbelwelle bzw. des Lagers des Gehäuses 12 folgt und somit den Reibwiderstand gering hält. Ein exzentrischer Teil 32 der Kurbelwelle 26 ist derart sich über den Mittenbereich 22 des Gehäuses 12 erstreckend angeordnet, daß zwischen seiner Längsachse und der dazu parallel verlaufenden Längsachse des zentrischen Teils 30 ein Abstand besteht. Auf dem sich außerhalb des Gehäuses 12 erstreckenden Abschnitt des zentrischen Teils 30 der Kurbelwelle 26 ist ein Halter 36 drehfest aufgesetzt. Mit diesem Halter 36 ist es möglich, die Lage der Kurbelwelle 26 gegenüber der Seitenwand 8 zu bestimmen und zu verhindern, daß sich die Kurbelwelle 26 während des Betriebs mit dem Gehäuse 12 dreht.

Der Einzugsfinger 28 erstreckt sich teils innerhalb und teils außerhalb des Gehäuses 12. In diesem Ausführungsbeispiel ist eine Vielzahl von Einzugsfingern 28 und demgemäß von Öffnungen 24 vorgesehen. Der innerhalb des Gehäuses 12 gelegene Abschnitt jedes Einzugsfingers 28 ist endseitig mit einem Lager 34 zur schwenkbeweglichen Montage auf dem exzentrischen Teil 32 versehen. Die Öffnung 24 in der Umfangsfläche des Gehäuses 12 dient der gleitbeweglichen Aufnahme des Einzugsfingers 28, wozu auch ein nicht gezeigtes Gleitlager verwendet werden kann.

Die Kurbelwelle 26 kann - was nicht gezeigt ist - mit einem Ausgleichsgewicht versehen werden, das das Drehmoment des exzentrischen Teils 32 und der Einzugsfinger 28 um die Schwenkachse der Kurbelwelle 26 wenigstens teilweise ausgleicht, so daß die Kurbelwelle 26 nahezu einen Gleichgewichtszustand einnimmt und aufgrund dessen bereits bei kleinen Außenkräften von der einen in die andere Endstellung schwenken kann.

Da die Kurbelwelle 26 mit dem Halter 36 an der Seitenwand 8 oder einen anderen ortsfesten Teil gegen eine Schwenkbewegung, jedenfalls gegen eine beliebiger Größe gesichert werden kann und sich das Gehäuse 12 stets um den zentrischen Teil 30 der Kurbelwelle 26 dreht, führt die Lagerung des oder der Einzugsfinger 28 auf dem exzentrischen Teil 32 dazu, daß beim Umlauf des Gehäuses 12 der/die Einzugsfinger 28 von der Wand des Gehäuses 12 mitgenommen und um den exzentrischen Teil 32 geschwenkt werden. Während eines Umlaufs des Gehäuses 12 verändert sich der Abstand der Öffnung 24 zu dem exzentrischen Teil 32, so daß die Länge des aus dem Gehäuse 12 herausragenden Teils des Einzugsfingers 28 zwischen einem Minimal- und einem Maximalwert variiert. Da der Umlaufförderer 10 im vorliegenden Fall als unterschlächtiger Förderer ausgebildet ist, erstrecken sich die Einzugsfinger 28 in einem vorderen, stromaufwärts gelegenen Bereich - A - weitestmöglich aus dem Gehäuse 12, während sie in einem rückwärtigen, stromabwärts gelegenen und zu einem weiteren, nicht gezeigten Förderer führenden Bereich - B - so wenig wie möglich aus dem Gehäuse 12 ragen.

Soweit der Umlaufförderer 10 bisher beschrieben worden ist, trifft dies auch auf Umlaufförderer aus dem Stand der Technik zu.

Die erfindungsgemäße Steuerungseinrichtung 16 hat die Aufgabe, die Stellung der Kurbelwelle 26 und mithin auch die der Einzugsfinger 28 gegenüber dem Gehäuse 12 zu bestimmen bzw. zu ändern.

Hierzu ist der zentrische Teil 30 der Kurbelwelle 26 in einem Lagerschild 38 schwenkbar aufgenommen, wobei das Lagerschild 38 drei auf einem Kreisbogen verlaufende Längsschlitze 40 enthält, durch die in die Seitenwand einsetzbare Schrauben 42 führen. Das Lagerschild 38 ist darüberhinaus mit zwei Anschlägen 44', 44'' versehen, die aufgrund der starren Verbindung mit dem Lagerschild 38 und dessen Montage in Längsschlitzen 40 in verschiedene Stellungen auf der Seitenwand 8 bringbar sind. Die Lage und Größe der Anschläge 44', 44'' ist so gewählt, daß der auf den zentrischen Teil 30 der Kurbelwelle 26 aufgesetzte Halter 36 an ihnen zur Anlage bringbar ist. Nach einem bevorzugten Ausführungsbeispiel werden die Anschläge 44', 44'' aus den Enden einer sich über einen Winkel von ca. 180° erstreckenden Bogenrippe gewonnen. Anstatt durch die Enden der Bogenrippe können die Anschläge 44', 44'' auch von Stiften, Nocken, Nasen oder dergleichen, die direkt oder indirekt auf dem Lagerschild 38 oder der Seitenwand 8 befestigt sind, gebildet werden. Demnach kann die Kurbelwelle 26 mit ihrem Halter 36 in dem Bereich zwischen beiden Anschlägen 44', 44'' frei schwenken.

Es ist des weiteren denkbar, anstatt der Anschläge 44', 44'' oder zusätzlich einen insbesondere fernsteuerbaren Riegel, z. B. einen elektromagnetisch betätigbaren Bolzen in die Bewegungsbahn des Halters 36 einzuführen, mit dessen Hilfe der Halter 36 z. B. ganz blockiert werden kann.

Aus der bisherigen Beschreibung ergibt sich folgende Funktion der erfindungsgemäßen Steuerungseinrichtung 16.

Das Gehäuse 12 wird im Sinn einer unterschlächtigen Förderung in Drehung versetzt, d. h. mit Blick auf Figur 1 im Uhrzeigerdrehsinn. Sobald sich im Bereich der über das Gehäuse 12 hinausragenden Abschnitte der Einzugsfinger 28 zu förderndes Material befindet, werden die Einzugsfinger 28 aufgrund der nunmehr von diesem Material auf sie einwirkenden äußeren Kraft entgegen dem Uhrzeigerdrehsinn um einen Punkt in der Wandung des Gehäuses 12 geschwenkt. Aufgrund dieser Schwenkbewegung wird der exzentrische Teil 32 der Kurbelwelle 26 nach unten bewegt, so daß die Kurbelwelle 26 insgesamt ebenfalls im Uhrzeigerdrehsinn so lange schwenkt, bis der Halter 36 an dem in der Bewegungsrichtung folgenden Anschlag 44'' anliegt; diese Situation ist in der Zeichnung wiedergegeben. Sobald die Kurbelwelle 26 nicht mehr weiter schwenken kann, wird das Material von dem Gehäuse 12 und den Einzugsfingern 28 in Umfangsrichtung so lange mitgenommen, bis es zu dem nicht gezeigten, stromabwärts gelegenen weiteren Förderer gelangt. Im Abgabebereich zu diesem weiteren Förderer sind die Einzugsfinger 28 weit in das Gehäuse 12 zurückgezogen und geben das Material somit frei.

Für den Fall, daß der Umlaufförderer 10 verstopft, d. h., daß zu viel zu förderndes Material zwischen das Gehäuse 12 und dessen Schneckenwendel 20 und eine sie teilweise umfangsmäßig umgebende nicht gezeigte Wanne gelangt, wird die Drehrichtung des Gehäuses 12 umgekehrt, d. h. sie dreht mit Blick auf Figur 1 entgegen dem Uhrzeigerdrehsinn. Das Verhalten der Einzugsfinger 28 aufgrund der erfindungsgemäßen Steuereinrichtung 16 erfolgt nun analog zu dem zuvor Beschriebenen, jedoch in der entgegengesetzten Richtung.

Sobald das Gehäuse 12 in der entgegengesetzten Richtung dreht, werden die aus dem Gehäuse 12 herausragenden Abschnitte der Einzugsfinger 28 auf der mit Blick auf Figur 1 rechten, d. h. vorderen oder stromabwärts gelegenen Seite von dem zu befördernden Material beaufschlagt und bewirken, daß die Einzugsfinger 28 um den gedachten oder tatsächlich vorhandenen Lagerpunkt in der Wandung des Gehäuses 12 im Uhrzeigerdrehsinn schwenken und somit den exzentrischen Teil 32 der Kurbelwelle 26 nach oben drehen; demnach dreht die Kurbelwelle 26 entgegen dem Uhrzeigerdrehsinn und zieht dabei einerseits die aus dem Gehäuse 12 an dessen Vorderseite - in Figur 1 rechts - herausragenden Einzugsfinger 28 zurück, während sie andererseits die zurückgezogenen Einzugsfinger 28 auf der rückwärtigen und dem weiteren Förderer zugelegenen Seite nach außen schiebt. Dieser Vorgang vollzieht sich so lange, bis der Halter 36 an dem anderen Anschlag 44' zur Anlage kommt. Sobald die Anlage des Halters 36 an dem Anschlag 44' erfolgt ist, können die Einzugsfinger 28 der äußeren Kraft nicht mehr ausweichen und nehmen aufgrund der Drehbewegung des Gehäuses 12 das Material nunmehr in der anderen Richtung mit, um die Verstopfung zu beseitigen.

## Patentansprüche

1. Steuerungseinrichtung (16) wenigstens eines Einzugsfingers (28) eines Umlaufförderers (10), der einenends auf dem exzentrischen Teil (32) einer Kurbelwelle (26) schwenkbar und in einer Wandung eines Gehäuses (12) verschiebbar gelagert ist, dadurch gekennzeichnet, daß die Kurbelwelle (26) lose gelagert und aufgrund der auf den Einzugsfinger (28) wirkenden Kraft zwischen zwei Endstellungen schwenkbar ist.

2. Steuerungseinrichtung nach Anspruch 1, dadurch gekennzeichnet, daß die Endstellungen von einem oder mehreren ortsfesten Anschlägen (44', 44'') bestimmt werden.

3. Steuerungseinrichtung nach Anspruch 2, dadurch gekennzeichnet, daß die Kurbelwelle (26) mit einem Halter (36) versehen ist, der an den oder die Anschläge (44', 44'') zur Anlage bringbar ist.

4. Steuerungseinrichtung nach Anspruch 2 oder 3, dadurch gekennzeichnet, daß wenigstens einer der Anschläge (44', 44'') in der Drehrichtung der Kurbelwelle (26) verstellbar ist.

5. Steuerungseinrichtung nach einem oder mehreren der vorherigen Ansprüche, gekennzeichnet durch einen Riegel, der in die Bewegungsbahn des Halters (36) einführbar ist.

6. Steuerungseinrichtung nach Anspruch 5, dadurch gekennzeichnet, daß der Riegel fernbetätigbar, insbesondere elektrisch, steuerbar ist.

7. Steuerungseinrichtung nach einem oder mehreren der vorherigen Ansprüche, dadurch gekennzeichnet, daß die Kurbelwelle (26) mit einem Gewicht zum vollen oder teilweisen Ausgleich des von dem exzentrischen Teil (32) und/oder den Einzugsfingern (28) herrührenden Drehmoments versehen ist.

8. Steuerungseinrichtung nach einem oder mehreren der vorherigen Ansprüche, dadurch gekennzeichnet, daß die Kurbelwelle (26) in eine Pendelbewegung gestattenden Wälz- oder Gleitlagern gehalten ist.

## Claims

1. A control device (16) of at least one intake finger (28) of a rotary conveyor (10), which is pivotally mounted at one end on the eccentric part (32) of a crankshaft (26) and is slidably mounted in a wall of a housing (12), characterized in that the crankshaft (26) is freely mounted and can pivot between two end positions on account of the force acting on the intake finger (28).

2. A control device according to claim 1, characterized in that the end positions are determined by one or more positionally fixed stops (44', 44'').

3. A control device according to claim 2, characterized in that the crankshaft (26) is provided with a retainer (36), which can be brought into abutment with the stop or the stops (44', 44'').

4. A control device according to claim 2 or 3, characterized in that at least one of the stops (44', 44'') can be adjusted in the direction of rotation of the crankshaft (26).

5. A control device according to one or more of the preceding claims, characterized by a lock which can be introduced into the path of movement of the retainer (36).

6. A control device according to claim 5, characterized in that the lock can be operated remotely, in particular electrically.

7. A control device according to one or more of the preceding claims, characterized in that the crankshaft (26) is provided with a weight for complete or partial balancing of the turning moments caused by the eccentric part (32) and/or the intake fingers (28).

8. A control device according to one or more of the preceding claims, characterized in that the crankshaft (26) is retained in a rolling or plain bearing allowing pendulum motion.

## Revendications

1. Dispositif de commande (16) d'au moins un doigt rétractable (28) d'un convoyeur rotatif (10), qui, a une extrémité, est monté de manière à pouvoir basculer sur la partie excentrique (32) d'un vilebrequin (26) et est translatable dans une paroi d'un carter (12), caractérisé en ce que le vilebrequin (26) est tourillonné de façon lâche et, en raison de la force agissant sur le doigt rétractable (28), peut basculer entre deux positions d'extrémité.

2. Dispositif de commande selon la revendication l, caractérisé en ce que les positions d'extrémité d'une ou de plusieurs butées fixes (44' ,44'') sont déterminées.

3. Dispositif de commande selon la revendication 2, caractérisé en ce que le vilebrequin (26) est équipé d'un dispositif de support (36), qui peut être appliqué contre la ou les butées (44' ,44'').

4. Dispositif de commande selon la revendication 2 ou 3, caractérisé en ce qu'au moins l'une des butées (44' ,44'') est déplaçable dans le sens de rotation du vilebrequin (26).

5. Dispositif de commande selon une ou plusieurs des revendications précédentes, caractérisé par un verrou, qui peut être introduit dans la voie de déplacement du dispositif de retenue (36).

6. Dispositif de commande selon la revendication 5, caractérisé en ce que le verrou peut être commandé à distance, notamment électriquement.

7. Dispositif de commande selon une ou plusieurs des revendications précédentes, caractérisé en ce que le vilebrequin (26) comporte un poids pour équilibrer totalement ou en partie le couple produit par la partie excentrique (32) et/ou les doigts rétractables (28).

8. Dispositif de commande selon une ou plusieurs des revendications précédentes, caractérisé en ce que le vilebrequin (26) est retenu dans des roulements ou dans des paliers lisses permettant un déplacement pendulaire.
